# EUROPÄISCHE PATENTANMELDUNG

(11) **EP 3 438 771 A1**
(43) Veröffentlichungstag der Anmeldung: **06.02.2019**
(21) Anmeldenummer: 17184010.1
(22) Anmeldetag: 31.07.2017
(51) Int. Cl.: G05B 19/404, G05B 19/19

(54) **BEARBEITUNG VON WERKSTÜCKEN MIT FEHLERKOMPENSATION**

(71) Anmelder: Siemens Aktiengesellschaft, 80333 München (DE)
(72) Erfinder: Bretschneider, Jochen, 73732 Esslingen (DE); Geissdörfer, Klaus, 91056 Erlangen (DE); Hamm, Carsten, 91330 Eggolsheim (DE); Haschka, Markus Stephan, 76137 Karlsruhe (DE); Rost, Philipp, 90425 Nürnberg (DE); Schäfers, Elmar, 90763 Fürth (DE)

(57) **Zusammenfassung**

Einer Steuereinrichtung (5) einer Werkzeugmaschine (1) wird eine Folge von Sollwertvektoren (V) vorgegeben. Die Sollwertvektoren (V) umfassen für eine Mehrzahl von lagegeregelten Achsen (3) der Werkzeugmaschine (1) jeweils einen Lagesollwert (x*, y*, z*, ...). Die Steuereinrichtung (5) steuert die lagegeregelten Achsen (3) über einen jeweiligen Lageregler (10) entsprechend den jeweiligen Lagesollwerten (x*, y*, z*, ...) an. Dadurch wird ein Werkzeug (4) der Werkzeugmaschine (1) entlang einer Bahn (9) relativ zu einem Werkstück (2) verfahren. In einer der Steuereinrichtung (5) zugeordneten Speichereinrichtung (11) ist zumindest für einen ersten Abschnitt der Bahn (9) für mindestens eine der lagegeregelten Achsen (3) unter direkter oder indirekter Zuordnung zu den mit dem ersten Abschnitt der Bahn (9) korrespondierenden Sollwertvektoren (V) eine Anzahl von Sätzen (22) von jeweiligen Korrekturwerten (ex) hinterlegt. Die Steuereinrichtung (5) ruft die Korrekturwerte (ex) eines der Sätze (22) aus der Speichereinrichtung (11) ab und berücksichtigt sie beim Verfahren des Werkzeugs (4) relativ zu dem Werkstück (2) entlang des ersten Abschnitts der Bahn (9) bei der Ansteuerung der jeweiligen Achse (3) zusätzlich zum jeweiligen Lagesollwert (x*).

## Beschreibung

Die vorliegende Erfindung geht aus von einem Bearbeitungsverfahren für ein Werkstück durch eine Werkzeugmaschine,
- wobei einer Steuereinrichtung der Werkzeugmaschine eine Folge von Sollwertvektoren vorgegeben wird,
- wobei die Sollwertvektoren für eine Mehrzahl von lagegeregelten Achsen der Werkzeugmaschine jeweils einen Lagesollwert umfassen,
- wobei die Steuereinrichtung die lagegeregelten Achsen über einen jeweiligen Lageregler entsprechend den jeweiligen Lagesollwerten ansteuert, so dass ein Werkzeug der Werkzeugmaschine entlang einer Bahn relativ zu dem Werkstück verfahren wird.

Die vorliegende Erfindung geht weiterhin aus von einem Steuerprogramm für eine Steuereinrichtung einer Werkzeugmaschine, wobei das Steuerprogramm Maschinencode umfasst, der von der Steuereinrichtung abarbeitbar ist, wobei die Abarbeitung des Maschinencodes durch die Steuereinrichtung bewirkt, dass die Steuereinrichtung die Werkzeugmaschine gemäß einem derartigen Bearbeitungsverfahren betreibt.

Die vorliegende Erfindung geht weiterhin aus von einer Steuereinrichtung für eine Werkzeugmaschine, die mit einem derartigen Steuerprogramm programmiert ist, so dass sie im Betrieb die Werkzeugmaschine gemäß einem derartigen Bearbeitungsverfahren betreibt.

Die vorliegende Erfindung geht weiterhin aus von einer Werkzeugmaschine zum Bearbeiten eines Werkstücks durch ein Werkzeug,
- wobei die Werkzeugmaschine eine Mehrzahl von lagegeregelten Achsen aufweist, mittels derer das Werkzeug entlang einer Bahn relativ zu dem Werkstück verfahrbar ist,
- wobei die Werkzeugmaschine eine derartige Steuereinrichtung aufweist, über welche die Achsen der Werkzeugmaschine lagegeregelt werden.

Die oben genannten Gegenstände sind allgemein bekannt. Insbesondere erfolgt auf diese Art und Weise üblicherweise die Bearbeitung von Werkstücken durch Werkzeugmaschinen.

Im Stand der Technik werden bei der wiederholten Herstellung identischer Werkstücke keine Informationen über vorherige Bearbeitungen von Werkstücken genutzt. Bei der Herstellung eines nachfolgenden Werkstücks wird somit insbesondere nicht berücksichtigt, welche Fehler bei der Herstellung eines vorhergehenden, identischen Werkstücks gemacht wurden. Die Ursache der Fehler können beispielsweise Störungen wie Reibung oder Riemenkräfte und auch Bearbeitungskräfte sein. Auch entstehen Bearbeitungsfehler dadurch, dass Führungsgrößen (d.h. die Sollwerte) von den Achsen nicht exakt angenommen werden können. In der Folge wiederholt sich ein einmal auftretender systematischer Fehler von Werkstück zu Werkstück.

Im Stand der Technik sind Betriebsweisen für Werkzeugmaschinen bekannt, bei denen bei periodischen Vorgängen oder Prozessen der Regelfehler während des Prozesses über eine Periode gespeichert und sodann mittels einer geeigneten Signalverarbeitung die Regelgüte verbessert wird. Rein beispielhaft kann hierfür auf die EP 2 988 181 A1 verwiesen werden. Die aus der genannten EP-Schrift bekannten Vorgehensweisen eignen sich ausschließlich für streng periodische Prozesse wie sie beispielsweise bei rotierenden Rundachsen auftreten. Ähnliche Vorgehensweisen sind auch in der älteren, am Anmeldetag der vorliegenden Erfindung noch nicht veröffentlichten PCT/EP 2017/05105 der Anmelderin (Anmeldetag 19.01.2017) beschrieben.

Bei der aus der EP 2 988 181 A1 bekannten Vorgehensweise ist es zwar möglich, die als Funktion der Zeit gegebenen Korrekturgrößen basierend auf einer bekannten Vorschubgeschwindigkeit in einen Ortsbezug umzurechnen. Dennoch ist die Vorgehensweise auf streng periodische Prozesse beschränkt. Insbesondere ist es nicht möglich, die Vorschubgeschwindigkeit in beliebigem Umfang zu variieren. Auch ist es nicht möglich, den periodischen Prozess zu unterbrechen und danach sozusagen stoßfrei wieder aufzunehmen.

Die Aufgabe der vorliegenden Erfindung besteht darin, Möglichkeiten zu schaffen, aufgrund derer bei wiederholt auszuführenden Bearbeitungen von Werkstücken auf zuverlässige und einfache Weise eine optimierte Bearbeitung erreicht werden kann.

Die Aufgabe wird durch ein Bearbeitungsverfahren mit den Merkmalen des Anspruchs 1 gelöst. Vorteilhafte Ausgestaltungen des Bearbeitungsverfahrens sind Gegenstand der abhängigen Ansprüche 2 bis 10.

Erfindungsgemäß wird ein Bearbeitungsverfahren der eingangs genannten Art dadurch ausgestaltet,
- dass in einer der Steuereinrichtung zugeordneten Speichereinrichtung zumindest für einen ersten Abschnitt der Bahn für mindestens eine der lagegeregelten Achsen unter direkter oder indirekter Zuordnung zu den mit dem ersten Abschnitt der Bahn korrespondierenden Sollwertvektoren eine Anzahl von Sätzen von jeweiligen Korrekturwerten hinterlegt ist und
- dass die Steuereinrichtung die Korrekturwerte eines der Sätze aus der Speichereinrichtung abruft und beim Verfahren des Werkzeugs relativ zu dem Werkstück entlang des ersten Abschnitts der Bahn bei der Ansteuerung der jeweiligen Achse zusätzlich zum jeweiligen Lagesollwert berücksichtigt.

Die Korrektur der einzelnen Lagesollwerte erfolgt also - ebenso wie beispielsweise bei der EP 2 988 181 A1 - isoliert für die jeweilige lagegeregelte Achse. Im Gegensatz zur EP 2 988 181 A1 sind die Korrekturwerte aber unabhängig von einer bestimmten Periode. Weiterhin sind sie nicht dem einzelnen Sollwert der jeweiligen Achse zugeordnet, sondern den Sollwertvektoren. Wenn also beispielsweise ein bestimmter Korrekturwert für die x-Achse bestimmt ist, so wirkt der Korrekturwert zwar stets auf die x-Achse. Der Korrekturwert als solcher hängt jedoch nicht nur von dem Sollwert für die x-Achse ab, sondern zusätzlich auch von den Sollwerten für die anderen Achsen. Weiterhin bilden die Korrekturwerte aufgrund der Zuordnung zu den Sollwertvektoren ebenfalls eine entsprechende Folge.

Die erfindungsgemäße ergriffene Vorgehensweise ist auch nicht mit einer impliziten Fehlerkompensation durch Modifizierung des Teileprogramms (bzw. der Folge von Sollwertvektoren) vergleichbar. Denn die Folge von Sollwertvektoren bleibt unverändert. Sie repräsentiert den Idealzustand, wenn also eine ideale Bearbeitung des Werkstücks ohne Fehler möglich wäre. Die Erfindung basiert vielmehr auf der Erkenntnis, die sich bei einer Vorgabe idealer Sollwertvektoren ergebenden Regelfehler zu erfassen und hierfür eigenständige Kompensationssignale zu ermitteln, die bei der Bearbeitung des nächsten Werkstücks zusätzlich zu den Sollwertvektoren verwertet werden.

Es ist möglich, dass die genannte Vorgehensweise für die gesamte Bahn ergriffen wird. Alternativ ist es möglich, dass die genannte Vorgehensweise nur für einen einzelnen Abschnitt der Bahn oder auch mehrere Abschnitte der Bahn ausgeführt wird, beispielsweise für Stellen, an denen mit hoher Geschwindigkeit enge Radien gefahren werden sollen.

Es ist möglich, dass die Sollwertvektoren jeweils ausschließlich die Position des Werkzeugs relativ zum Werkstück bestimmen. Alternativ ist es möglich, dass die Sollwertvektoren die Position und die Orientierung des Werkzeugs relativ zum Werkstück bestimmen. In beiden Fällen umfassen die Sollwertvektoren aber jeweils mindestens drei Komponenten.

Alternativ zu einer Korrektur der Sollwerte für die gesamte Bahn oder für nur einen einzelnen Abschnitt der Bahn ist es auch möglich, dass die Sollwerte auch für mehrere Abschnitte der Bahn korrigiert werden. Im einfachsten Fall sind für jeden derartigen Abschnitt jeweils eigenständige Sätze von Korrekturwerten in der Speichereinrichtung hinterlegt. In vielen Fällen treten bei der Bearbeitung eines Werkstücks jedoch wiederholt gleichartige Bearbeitungsvorgänge auf. Beispielsweise können in ein Werkstück an verschiedenen Stellen jeweils gleichartige Strukturen eingebracht werden. In diesem Fall ist es möglich, dass die Sätze von Korrekturwerten für den ersten Abschnitt der Bahn in der Speichereinrichtung auch für mindestens einen zweiten Abschnitt der Bahn unter Zuordnung zu den mit dem zweiten Abschnitt der Bahn korrespondierenden Sollwertvektoren hinterlegt sind und dass die Steuereinrichtung die Korrekturwerte eines der Sätze beim Verfahren des Werkzeugs relativ zu dem Werkstück entlang des zweiten Abschnitts der Bahn aus der Speichereinrichtung abruft und bei der Ansteuerung der jeweiligen Achse zusätzlich zum jeweiligen Lagesollwert berücksichtigt.

Im Idealfall ist die Aufspannung des Werkstücks in einer Werkstückhalterung der Werkzeugmaschine irrelevant oder stets identisch. Alternativ ist es möglich, dass zu Beginn der Bearbeitung des Werkstücks durch die Werkzeugmaschine eine Aufspannung des Werkstücks in einer Werkstückhalterung der Werkzeugmaschine erfasst wird und dass die Steuereinrichtung die Korrekturwerte vor ihrer Berücksichtigung anhand der erfassten Aufspannung modifiziert. Beispielsweise kann die Steuereinrichtung einen translatorischen und/oder rotatorischen Versatz des Werkstücks in der Werkstückhalterung, aufgrund derer die Soll-Ansteuerung der lagegeregelten Achsen geändert werden muss, auch bei der Ermittlung der Korrekturwerte mit berücksichtigen. Der Versatz und hiermit korrespondierend die Modifikation der Korrekturwerte ist in der Regel nur geringfügig. Die Vorgehensweise ist aber nicht auf geringfügige Werte beschränkt.

In vielen Fällen werden die Lagesollwerte der Achsen durch Führungsgrößenfilter geglättet. In diesem Fall kann eine höhere Dynamik und bessere Fehlerkorrektur dadurch erreicht werden, dass die Steuereinrichtung beim Berücksichtigen der Korrekturwerte zusätzlich einen Zeitversatz zwischen dem jeweiligen Korrekturwert und dem jeweiligen Sollwertvektor berücksichtigt.

In vielen Fällen implementiert die Steuereinrichtung weiterhin mindestens einen weiteren Regler, der dem jeweiligen Lageregler - d.h. demjenigen Lageregler, dessen Sollwerte durch die Korrekturwerte modifiziert werden - unterlagert ist. In diesem Fall führt es ebenfalls zu einer höheren Dynamik und einer besseren Fehlerkorrektur, wenn die Steuereinrichtung aus den Korrekturwerten ein Vorsteuersignal ableitet und dem unterlagerten Regler zuführt. Der unterlagerte Regler kann beispielsweise ein Drehzahl- oder Geschwindigkeitsregler oder ein Moment-, Beschleunigungs- oder Stromregler sein. Auch beide Reglerarten - also ein Drehzahl- oder Geschwindigkeitsregler zusätzlich zu einem Moment-, Beschleunigungs- oder Stromregler - sind möglich.

Minimal beträgt die Anzahl an Sätzen von Korrekturwerten 1. Es ist jedoch möglich, dass die Anzahl von Sätzen größer als 1 ist. In diesem Fall wählt die Steuereinrichtung in Abhängigkeit von weiteren, von dem Abschnitt der Bahn verschiedenen Parametern aus, welchen der Sätze von Korrekturwerten sie aus der Speichereinrichtung abruft und bei der Ansteuerung der jeweiligen Achse zusätzlich zum jeweiligen Lagesollwert berücksichtigt. Beispiele derartiger Parameter sind die Temperatur des Werkstücks, die Schmierung von Elementen der Werkzeugmaschine oder zwischen Werkstück und Werkzeug, das Material des Werkstücks oder eine Verfahrgeschwindigkeit. Je nach Art des Parameters kann gegebenenfalls zwischen verschiedenen Sätzen von Korrekturwerten interpoliert werden.

Es ist möglich, dass die Steuereinrichtung die Korrekturwerte des jeweiligen Satzes vor ihrer Berücksichtigung anhand einer Verfahrgeschwindigkeit beim Abfahren der Bahn modifiziert. Dadurch kann unter Umständen eine noch bessere Optimierung der Fehlerkorrektur erreicht werden.

Vorzugsweise ermittelt die Steuereinrichtung durch Vergleich eines jeweiligen Lageistwerts mit dem jeweiligen Lagesollwert der lagegeregelten Achse einen Lageregelfehler und modifiziert die Korrekturwerte des jeweiligen Satzes von Korrekturwerten anhand des Lageregelfehlers. Dadurch kann eine allmählich immer bessere Korrektur von Regelabweichungen erfolgen.

Die Aufgabe wird weiterhin durch ein Steuerprogramm für eine Steuereinrichtung einer Werkzeugmaschine mit den Merkmalen des Anspruchs 11 gelöst. Erfindungsgemäß bewirkt die Abarbeitung des Maschinencodes durch die Steuereinrichtung, dass die Steuereinrichtung die Werkzeugmaschine gemäß einem erfindungsgemäßen Bearbeitungsverfahren betreibt.

Die Aufgabe wird weiterhin durch eine Steuereinrichtung für eine Werkzeugmaschine mit den Merkmalen des Anspruchs 12 gelöst. Erfindungsgemäß ist die Steuereinrichtung mit einem erfindungsgemäßen Steuerprogramm programmiert, so dass sie im Betrieb die Werkzeugmaschine gemäß einem erfindungsgemäßen Bearbeitungsverfahren betreibt.

Die Aufgabe wird weiterhin durch eine Werkzeugmaschine zum Bearbeiten eines Werkstücks durch ein Werkzeug mit den Merkmalen des Anspruchs 13 gelöst. Erfindungsgemäß ist bei einer Werkzeugmaschine der eingangs genannten Art die Steuereinrichtung erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine nebst Steuereinrichtung und Werkstück,
- FIG 2: eine mögliche Implementierung einer Steuereinrichtung,
- FIG 3: beispielhaft eine mögliche Bearbeitung eines Werkstücks durch ein Werkzeug,
- FIG 4: beispielhaft eine weitere mögliche Bearbeitung eines Werkstücks durch ein Werkzeug,
- FIG 5: ein Ablaufdiagramm,
- FIG 6: ein Werkstück in einer Werkstückhalterung,
- FIG 7: einen Ausschnitt von FIG 2 in modifizierter Form,
- FIG 8: ein Ablaufdiagramm,
- FIG 9: ein Ablaufdiagramm und
- FIG 10: eine Modifikation von FIG 2.

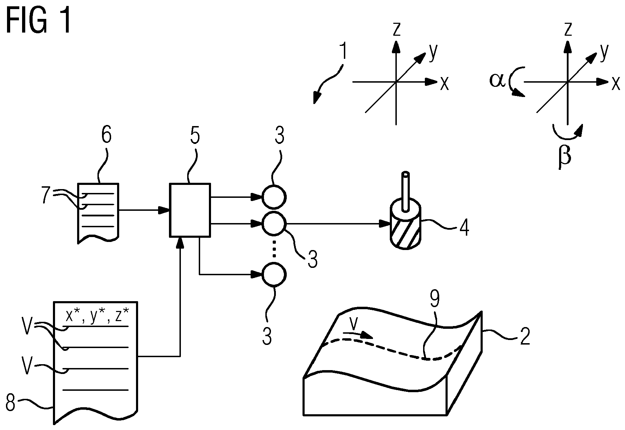

Gemäß FIG 1 dient eine Werkzeugmaschine 1 der Bearbeitung eines Werkstücks 2. Die Werkzeugmaschine 1 weist mehrere lagegeregelte Achsen 3 auf. Minimal sind drei lagegeregelte Achsen 3 vorhanden. In diesem Fall ist ein Werkzeug 4, mittels dessen das Werkstück 2 bearbeitet wird, relativ zum Werkstück 2 in der Regel ausschließlich translatorisch verfahrbar. Die Verfahrbarkeit ist in FIG 1 durch die Angabe der translatorischen Richtungen x, y, z eines üblichen kartesischen Koordinatensystems angedeutet. In vielen Fällen sind jedoch mehr als drei lagegeregelte Achsen 3 vorhanden, beispielsweise fünf lagegeregelte Achsen 3. In diesem Fall ist das Werkzeug 4 relativ zum Werkstück 2 in der Regel translatorisch verfahrbar und zusätzlich rotatorisch orientierbar. Dies ist in FIG 1 durch die alternative Angabe der translatorischen Richtungen x, y, z des kartesischen Koordinatensystems zuzüglich der Angabe zweier Winkel α, β angedeutet. Das Werkzeug 4 kann beispielsweise ein Bohrer oder ein Fräser sein. Das Werkzeug 4 kann jedoch auch anders ausgebildet sein, insbesondere auch für eine kontaktlose Bearbeitung des Werkstücks 2, beispielsweise als Laser.

Die Werkzeugmaschine 1 weist eine Steuereinrichtung 5 auf. Die Steuereinrichtung 5 ist in der Regel als numerische Steuerung ausgebildet. Sie ist weiterhin in der Regel softwareprogrammierbar. Ihre prinzipielle Wirkungsweise wird daher durch ein Steuerprogramm 6 bestimmt, mit dem die Steuereinrichtung 5 programmiert ist. Das Steuerprogramm 6 umfasst Maschinencode 7, der von der Steuereinrichtung 5 abarbeitbar ist. Die Abarbeitung des Maschinencodes 7 durch die Steuereinrichtung 5 bewirkt, dass die Steuereinrichtung 5 die Werkzeugmaschine 1 gemäß einem Bearbeitungsverfahren betreibt, wie es nachstehend näher erläutert wird.

Zum Durchführen einer bestimmten Bearbeitung wird der Steuereinrichtung 5 zusätzlich ein Teileprogramm 8 zugeführt bzw. wird allgemein gesprochen der Steuereinrichtung 5 das Teileprogramm 8 vorgegeben. Das Teileprogramm 8 kann eine Folge von Sollwertvektoren V enthalten, die von der Steuereinrichtung 5 sequenziell nacheinander abgearbeitet werden. Alternativ ist es möglich, dass die Steuereinrichtung 5 die Folge von Sollwertvektoren V anhand des Teileprogramms 8 eigenständig generiert. Auch Mischformen sind möglich. Das Steuerprogramm 6 ist also die Systemsteuerung der Steuereinrichtung 5, welche die Art und Weise festlegt, auf die das Teileprogramm 8 abgearbeitet wird.

Jeder Sollwertvektor V enthält für jede lagegeregelte Achse 3 jeweils einen Sollwert x*, y*, z* usw. Dies ist in FIG 1 nur für den ersten Sollwertvektoren V dargestellt, gilt aber für alle Sollwertvektoren V. Jeder Sollwertvektor V legt aufgrund seiner Sollwerte x*, y*, z* usw. zumindest eine jeweilige Position des Werkzeugs 4 relativ zum Werkstück 2 fest, gegebenenfalls auch dessen Orientierung relativ zum Werkstück 2. Die Folge von Sollwertvektoren V legt dadurch eine Bahn 9 fest, entlang derer das Werkzeug 4 relativ zu dem Werkstück 2 verfahren werden soll. Die Bahn 9 umfasst gegebenenfalls auch die durch die Sollwertvektoren V festgelegte Orientierung des Werkzeugs 4 relativ zum Werkstück 2. Das entsprechende Verfahren erfolgt durch die Steuereinrichtung 5, welche die lagegeregelten Achsen 3 entsprechend ansteuert.

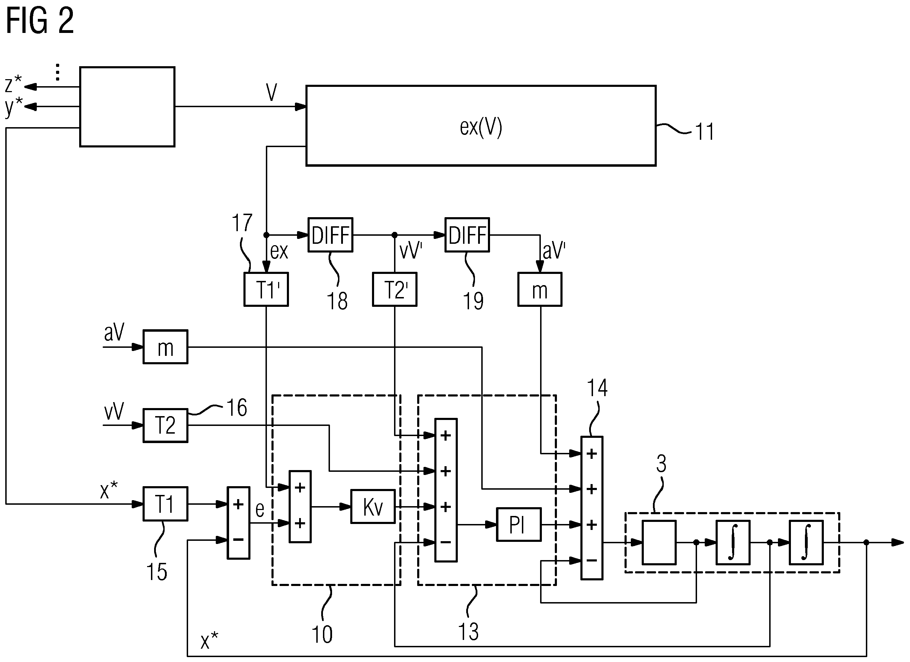

Zum Ansteuern der lagegeregelten Achsen 3 implementiert die Steuereinrichtung 5 gemäß FIG 2 einen jeweiligen Lageregler 10. Dargestellt ist dies in FIG 2 nur für eine einzelne lagegeregelte Achse 3, konkret für die Lageregelung der x-Achse. Ein entsprechender Lageregler 10 ist jedoch für jede lagegeregelte Achse 3 vorhanden. Weiterhin ist die Darstellung in FIG 2 zeitkontinuierlich. Die praktische Realisierung ist meist zeitdiskret. Insbesondere erfolgt sie in der Regel im gleichen Takt, mit der die lagegeregelten Achsen 3 auch gesteuert werden.

Über den jeweiligen Lageregler 10 steuert die Steuereinrichtung 5 die jeweilige lagegeregelte Achse 3 entsprechend ihrem jeweiligen Lagesollwert x*, y*, z* usw. an. Aufgrund der Ansteuerung wird das Werkzeug 4 entlang der Bahn 9 relativ zu dem Werkstück 2 verfahren.

Nachfolgend wird nur die Vorgehensweise für die x-Achse näher erläutert. Die entsprechenden Erläuterungen sind jedoch in analoger Weise auch für die anderen lagegeregelten Achsen 3 gültig. Auch sind sie gültig, wenn zusätzlich eine kinematische Transformation erforderlich sein sollte.

Dem Lageregler 10 wird einerseits - selbstverständlich - der zugehörige Lagesollwert x* zugeführt. Weiterhin wird dem Lageregler 10 der zugehörige Lageistwert x zugeführt. Der Lageregler 10 ermittelt eine Stellgröße, über welche die lagegeregelte Achse 3 angesteuert wird.

In einer der Steuereinrichtung 5 zugeordneten Speichereinrichtung 11 sind für die in FIG 2 betrachtete lagegeregelte Achse 3 Korrekturwerte ex hinterlegt. Die Korrekturwerte ex sind in der Speichereinrichtung 11 unter direkter oder indirekter Zuordnung zu den Sollwertvektoren V hinterlegt. Die Korrekturwerte ex bilden also entsprechend ihrer Zuordnung zu den Sollwertvektoren V eine Folge, wobei der jeweilige Korrekturwert ex spezifisch für den jeweiligen Sollwertvektor V ist. Der jeweilige Korrekturwert ex ist somit nicht nur vom Lagesollwert x* abhängig, sondern kann zusätzlich auch von anderen Lagesollwerten y*, z* usw. abhängig sein. Es sei an dieser Stelle erinnert, dass die Sollwertvektoren V jeweils zumindest die Position des Werkzeugs 4 relativ zum Werkstück 2 bestimmen, alternativ aber zusätzlich auch die Orientierung des Werkzeugs 4 relativ zum Werkstück 2 bestimmen können.

Die Zuordnung zu den Sollwertvektoren V kann im Werkstückkoordinatensystem vorgenommen werden. Alternativ kann die Zuordnung durch eine Zuordnung zu den Koordinaten im Maschinenkoordinatensystem vorgenommen werden. Letzteres ist insbesondere dann von Vorteil, wenn ein und dieselbe Bewegungsführung des Werkzeugs 4 durch verschiedene Ansteuerungen der lagegeregelten Achsen 3 erreicht werden kann. Wiederum alternativ kann die Zuordnung durch eine Zuordnung zum sogenannten Bahnparameter, d.h. der zurückgelegten Strecke, erfolgen.

Die Speichereinrichtung 11 kann in der Nähe der Steuereinrichtung 5 angeordnet sein. Sie kann aber auch weit von der Steuereinrichtung 5 entfernt angeordnet sein. Insbesondere ist es möglich, dass die Speichereinrichtung 11 Bestandteil einer Cloud ist.

Beim Cloud Computing stellt ein Anbieter Rechenleistung in Paketen zur Verfügung. Beispielsweise stehen einem Anbieter an einem bestimmten Ort auf der Erde insgesamt ca. 10.000 physikalische Rechner zur Verfügung. Jeder physikalische Rechner weist eine Anzahl von Rechnerkernen (CPUs) auf, beispielsweise 16 Rechnerkerne. Die physikalischen Rechner weisen weiterhin jeweils einen Arbeitsspeicher und einen Festplatten- oder vergleichbaren Speicher auf, beispielsweise 128 GB Arbeitsspeicher und 3 TB Festplattenspeicher. Die Rechnerkerne des jeweiligen Rechners teilen sich dynamisch den jeweiligen Arbeitsspeicher und den jeweiligen Festplattenspeicher. Die physikalischen Rechner können beispielsweise in 40-Fuß-Standardcontainern angeordnet sein. In mindestens einem weiteren derartigen Container ist ein zentraler Datenspeicher angeordnet, der beispielsweise mehrere 10 TB-Datenbank-Cluster umfasst, die jeweils aus einem System von mehreren Festplatten und spezialisierten Datenbank-Rechnern gebildet werden. Auch dieser Container ist an dem genannten Ort angeordnet. Die Container können permanent verschlossen bleiben. Sie benötigen lediglich Anschlüsse für die Energieversorgung, die Kühlung und die Kommunikation untereinander sowie mit dem Internet bzw. World Wide Web.

Der Anbieter bietet Gruppen von Rechnern an, die üblicherweise als virtuelle Maschinen bezeichnet werden. Von einem die virtuellen Maschinen verwaltenden Cloudrechner werden Anforderungen für virtuelle Maschinen entgegengenommen. Die Anforderungen werden von Rechnern von Rechnerverbunden gestellt und über das Internet an den Cloudrechner übermittelt. Der Cloudrechner reserviert daraufhin die jeweils angeforderte Menge an virtuellen Maschinen für die jeweilige Anforderung und übermittelt an den jeweils anfordernden Rechner die entsprechenden Zugriffsdaten, so dass vom jeweiligen Rechnerverbund aus auf die entsprechenden virtuellen Maschinen zugegriffen werden kann. Die Reservierung für die jeweilige Anforderung wird beibehalten, bis dem Cloudrechner vom anfordernden Rechner des Rechnerverbundes eine Freigabe übermittelt wird.

Die Steuereinrichtung 5 ruft den jeweiligen Korrekturwert ex aus der Speichereinrichtung 11 ab und führt ihn dem Lageregler 10 zu. Der Korrekturwert ex kann beispielsweise - je nach Art der Ermittlung des Korrekturwerts ex - zur Differenz e von Lagesollwert x* und Lageistwert x addiert oder von dieser Differenz e subtrahiert werden. Auf Basis der so korrigierten Regelabweichung e ermittelt der Lageregler 10 sein Stellsignal. Dadurch wird beim Verfahren des Werkzeugs 4 relativ zu dem Werkstück 2 bei der Ansteuerung der jeweiligen lagegeregelten Achse 3 der Korrekturwert ex zusätzlich zum jeweiligen Lagesollwert x* berücksichtigt.

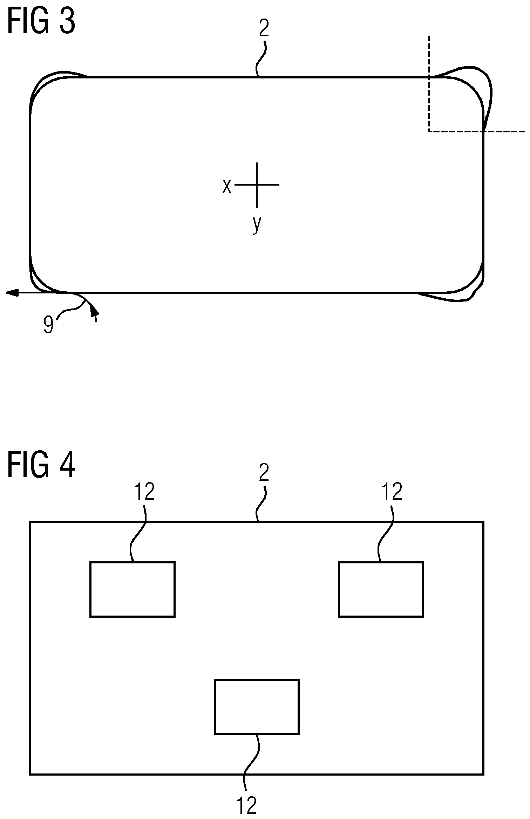

Es ist möglich, die genannte Vorgehensweise so wie sie ist für die gesamte Bahn 9 auszuführen. In diesem Fall ist in der Speichereinrichtung 11 für jeden Sollwertvektor V der jeweilige Korrekturwert ex hinterlegt. In vielen Fällen erfolgt in Teilbereichen der Bahn 9 jedoch auch ohne die Berücksichtigung des Korrekturwerts ex eine hinreichend genaue Bearbeitung des Werkstücks 2 durch das Werkzeug 4. Beispielsweise ist es entsprechend der Darstellung in FIG 3 möglich, dass entlang gerader Abschnitte der abzufahrenden Bahn 9 diese mit hinreichender Genauigkeit abgefahren werden, während in gekrümmten Bereichen Regelfehler auftreten. Die Regelfehler sind in FIG 3 deutlich übertrieben dargestellt, damit sie besser erkennbar sind. Sie liegen in der Regel bei wenigen Mikrometern. Sie sind jedoch nicht einheitlich für alle gekrümmten Bereiche, sondern von gekrümmtem Bereich zu gekrümmtem Bereich verschieden. In einem derartigen Fall - wenn also nur in manchen Abschnitten der abzufahrenden Bahn 9 nennenswerte Regelfehler auftreten - ist es möglich, die Korrekturwerte ex nur für diese Abschnitte in der Speichereinrichtung 11 zu hinterlegen, beispielsweise für den Abschnitt, der in FIG 3 durch die beiden gestrichelten Linien begrenzt ist. Die Anzahl an Abschnitten und auch deren Ausgestaltung kann nach Bedarf bestimmt sein. Auch die Verwertung der Korrekturwerte ex erfolgt in diesem Fall nur in diesen Abschnitten, während also der jeweilige Abschnitt der Bahn 9 abgefahren wird. Im verbleibenden Teil der Bahn 9 werden in diesem Fall keine Korrekturwerte ex verwertet.

Im Falle mehrerer Abschnitte sind in der Speichereinrichtung 11 im einfachsten Fall für die Sollwertvektoren V des jeweiligen Abschnitts jeweils eigene Korrekturwerte ex hinterlegt. In manchen Fällen kann es möglich sein, dass die Korrekturwerte ex für einen Abschnitt der Bahn 9 zugleich auch für mindestens einen weiteren Abschnitt der Bahn 9 hinterlegt sind. In diesem Fall sind die Korrekturwerte ex also unter Zuordnung zu den Sollwertvektoren V beider Abschnitte (oder gegebenenfalls sogar noch mehr Abschnitten) in der Speichereinrichtung 11 hinterlegt. In diesem Fall ruft die Steuereinrichtung 5 ein und dieselben Korrekturwerte ex nicht nur dann aus der Speichereinrichtung 11 ab und berücksichtigt sie bei der Ansteuerung der lagegeregelten Achse 3, wenn der eine Abschnitt der Bahn 9 abgefahren wird. Vielmehr ruft die Steuereinrichtung 5 diese Korrekturwerte ex auch dann aus der Speichereinrichtung 11 ab und berücksichtigt sie bei der Ansteuerung der lagegeregelten Achse 3, wenn der andere Abschnitt der Bahn 9 (oder ein weiterer Abschnitt, dem die Korrekturwerte ex ebenfalls zugeordnet sind) abgefahren wird.

Beispielsweise kann es entsprechend der Darstellung in FIG 4 möglich sein, dass an verschiedenen Stellen des Werkstücks 2 ein und dieselbe Struktur 12 eingebracht werden soll, beispielsweise entsprechend der Darstellung in FIG 4 eine im wesentlichen rechteckige Tasche mit abgerundeten Ecken. Im Falle gleichartiger Strukturen 12 unterscheiden sich die Sollwertvektoren V für das Einbringen einer der Strukturen 12 von den Sollwertvektoren V für das Einbringen einer anderen der Strukturen in der Regel nur durch einen konstanten translatorischen Offset. Je nach Art der Werkzeugmaschine 1 kann es in diesem Fall möglich sein, dieselben Korrekturwerte ex bei jeder dieser Strukturen 12 zu verwerten.

FIG 2 zeigt nicht nur das Grundprinzip der vorliegenden Erfindung, sondern zusätzlich auch einige Ausgestaltungen. Diese Ausgestaltungen werden nachstehend näher erläutert.

Zum einen ist es gängige Praxis bei der Lageregelung von Werkzeugmaschinen, dass dem Lageregler 10 ein Geschwindigkeits- oder Drehzahlregler 13 unterlagert ist. Dem Geschwindigkeits- oder Drehzahlregler 13 ist oftmals wiederum ein Beschleunigungs- , Moment- oder Stromregler 14 unterlagert. In seltenen Fällen ist der Beschleunigungs- , Moment- oder Stromregler 14 dem Lageregler 10 direkt unterlagert, der Geschwindigkeits- oder Drehzahlregler 13 also nicht vorhanden. Nachfolgend wird davon ausgegangen, dass der Regler 13 ein Geschwindigkeitsregler ist, der Regler 14 ein Beschleunigungsregler. Analoge Ausführungen sind jedoch auch dann gültig, wenn der Regler 13 ein Drehzahlregler und/oder der Regler 14 ein Moment- oder Stromregler ist.

Im Falle des Vorhandenseins des Geschwindigkeitsreglers 13 und/oder des Beschleunigungsreglers 14 werden von der Steuereinrichtung 5 anhand der Folge von Lagesollwerten x* ein jeweiliger Vorsteuerwert vV für den Geschwindigkeitsregler 13 und/oder ein jeweiliger Vorsteuerwert aV für den Beschleunigungsregler 14 ermittelt. Die Vorsteuerwerte vV, aV sind - ebenso wie die Lagesollwerte x* - Funktionen der Zeit. Die Ermittlung der Vorsteuerwerte vV, aV ist Fachleuten bekannt und vertraut und muss daher nicht näher erläutert werden. Aufgrund der Ermittlung der Vorsteuerwerte vV, aV erhöht sich die Dynamik der Lageregelung. Die Ermittlung der Vorsteuerwerte vV, aV führt jedoch dazu, dass die Vorsteuerwerte vV, aV gegenüber dem jeweils zugehörigen Lagesollwert x* zeitlich nacheilen. Damit die Aufschaltung der Vorsteuerwerte vV, aV zeitrichtig erfolgt, wird daher die Zuführung des Lagesollwertes x* entsprechend verzögert. Dies ist in FIG 2 durch ein Verzögerungsglied 15 implementiert, in dem der jeweilige Lagesollwert x* um eine Verzögerungszeit T1 verzögert wird. Sofern sowohl der Drehzahlregler 13 als auch der Beschleunigungsregler 14 vorhanden sind, eilt weiterhin auch der Vorsteuerwert aV für den Beschleunigungsregler 14 gegenüber dem Vorsteuerwert vV für den Drehzahlregler 13 nach. Aus diesem Grund ist gegebenenfalls ein weiteres Verzögerungsglied 16 vorhanden, mittels dessen der Vorsteuerwert vV für den Drehzahlregler 13 um eine Verzögerungszeit T2 verzögert wird. Diese Vorgehensweise ist, wie bereits erwähnt, Fachleuten bekannt.

Im Rahmen des Aufschaltens der Korrekturwerte ex ist ebenfalls eine zeitliche Verzögerung erforderlich. Hierfür ist ein Verzögerungsglied 17 vorhanden. Die Verzögerungszeit T1' des Verzögerungsgliedes 17 kann mit der Verzögerungszeit T1 des Verzögerungsgliedes 15 übereinstimmen. Es kann sich jedoch alternativ auch um einen anderen Wert handeln.

Im Falle des Vorhandenseins der unterlagerten Regler 13, 14 ist es weiterhin möglich, dass die Steuereinrichtung 5 - beispielsweise durch einmalige und zweimalige Differenziation in Differenzierern 18, 19 - aus den Korrekturwerten ex zusätzliche Vorsteuerwerte vV', aV' ermittelt und diese zusätzlich zu den Vorsteuerwerten vV, aV den entsprechenden unterlagerten Reglern 13, 14 zuführt. Soweit erforderlich können hierbei auch die Vorsteuerwerte vV', aV' in entsprechenden Verzögerungsgliedern 20 geeignet zeitlich verzögert werden, beispielsweise der Vorsteuerwert vV' um die Verzögerungszeit T2'. Die Verzögerungszeit T2' des Verzögerungsgliedes 20 kann mit der Verzögerungszeit T2 des Verzögerungsgliedes 16 übereinstimmen. Es kann sich jedoch alternativ auch um einen anderen Wert handeln.

Das obenstehend erläuterte Bearbeitungsverfahren arbeitet bereits recht gut. Es kann jedoch auf verschiedene Weise noch weiter verbessert werden.

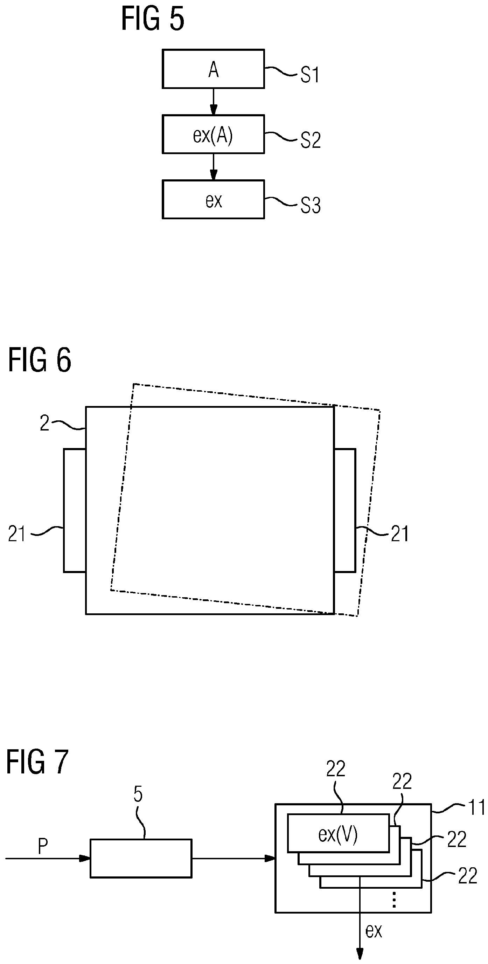

So ist es beispielsweise entsprechend der Darstellung in FIG 5 möglich, dass zu Beginn der Bearbeitung des Werkstücks 2 durch die Werkzeugmaschine 1 von der Steuereinrichtung 5 in einem Schritt S1 eine Aufspannung A des Werkstücks 2 in einer Werkstückhalterung 21 der Werkstückmaschine 1 (siehe FIG 6) erfasst wird. Die ordnungsgemäße Positionierung, die den unmodifizierten Korrekturwerten ex zugrunde liegt, ist in FIG 6 in durchgezogenen Linien dargestellt, die durch die Aufspannung A gegebene tatsächliche Positionierung in gestrichelten Linien. Wenn die Aufspannung A erfasst wird, kann die Steuereinrichtung 5 in einem Schritt S2 die Korrekturwerte ex anhand der erfassten Aufspannung A modifizieren und sodann in einem Schritt S3 die entsprechend modifizierten Korrekturwerte bei der Ansteuerung der lagegeregelten Achse 3 berücksichtigen. Bei der Modifikation der Korrekturwerte ex im Schritt S2 können beispielsweise, wie in FIG 6 angedeutet, eine leicht versetzte und/oder leicht verdrehte Positionierung des Werkstücks 2 in der Werkstückhalterung 21 berücksichtigt werden. Wenn beispielsweise das Werkstück 2 leicht verdreht ist, können die modifizierten Korrekturwerte für die x-, die y- und die z-Achse aus den unmodifizierten Korrekturwerten für die x-, die y- und die z-Achse durch eine Rotationstransformation (Stichwort "Eulermatrix") ermittelt werden.

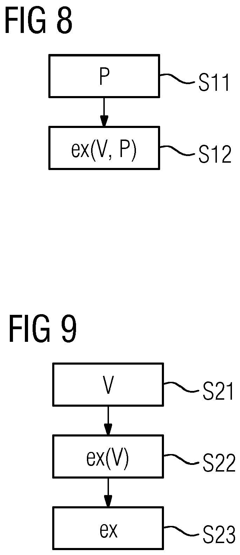

Weiterhin ist es möglich, dass in der Speichereinrichtung 11 entsprechend der Darstellung in FIG 7 mehrere Sätze 22 von Korrekturwerten ex hinterlegt sind. In diesem Fall werden der Steuereinrichtung 5 entsprechend der Darstellung in FIG 8 in einem Schritt S11 eine Anzahl von Parametern P - also mindestens ein Parameter P - bekannt. In diesem Fall wählt die Steuereinrichtung 5 in einem Schritt S12 in Abhängigkeit von den Parametern P aus, welchen der in der Speichereinrichtung 11 hinterlegten Sätze 22 von Korrekturwerten ex sie aus der Speichereinrichtung 11 abruft und bei der Ansteuerung der jeweiligen Achse 3 zusätzlich zum jeweiligen Lagesollwert x* berücksichtigt.

Der Parameter P bzw. die Parameter P können nach Bedarf bestimmt sein. Entscheidend ist in jedem Fall, dass es sich bei den Parametern P nicht um den jeweiligen Abschnitt der Bahn 9 handelt, sondern um hiervon verschiedene Parameter P. Beispielsweise kann es sich bei dem Parameter P um die Temperatur des Werkstücks 2 handeln. Dadurch kann beispielsweise eine thermische Ausdehnung berücksichtigt werden. Auch kann es sich beispielsweise um eine Schmierung zwischen Werkstück 2 und Werkzeug 4 handeln, weil eine derartige Schmierung Einfluss auf Reibungskräfte zwischen Werkstück 2 und Werkstück 4 hat und damit einen durch Bearbeitungskräfte bedingten Fehler beeinflusst. In analoger Weise kann beispielsweise das Material des Werkstücks 2 einen entsprechenden Einfluss haben. Auch eine Verfahrgeschwindigkeit v kann ein Parameter P sein. Auch die Aufspannung A kann unter Umständen ein derartiger Parameter sein.

In manchen Fällen kann es möglich sein, zwischen verschiedenen Sätzen 22 von Korrekturwerten ex zu interpolieren. Beispielsweise kann dies sinnvoll sein, wenn die Sätze 22 von Korrekturwerten ex (ausschließlich oder unter anderem) für verschiedene Temperaturen des Werkstücks 2 vorgegeben sind.

Es sind aber auch andere Ausgestaltungen denkbar, bei denen eine Interpolation sinnvoll sein kann.

Die Berücksichtigung der Verfahrgeschwindigkeit v beim Abfahren der Bahn 9 kann - alternativ oder zusätzlich zur Vorgehensweise gemäß den FIG 7 und 8 - auch auf andere Weise erfolgen. Insbesondere ist es entsprechend der Darstellung in FIG 9 möglich, dass der Steuereinrichtung 5 in einem Schritt S21 die Verfahrgeschwindigkeit v beim Abfahren der Bahn 9 bekannt wird. Beispielsweise kann die Steuereinrichtung 5 die Verfahrgeschwindigkeit v ohne weiteres selbst anhand der Geschwindigkeit ermitteln, mit der sie die Sollwertvektoren V abarbeitet. In diesem Fall kann die Steuereinrichtung 5 in einem Schritt S22 die Korrekturwerte ex - gegebenenfalls die Korrekturwerte ex des jeweiligen Satzes 22 von Korrekturwerten ex - anhand der Verfahrgeschwindigkeit v modifizieren. In diesem Fall werden die Korrekturwerte ex von der Steuereinrichtung 5 erst nach dieser Modifikation in einem Schritt S23 bei der Ansteuerung der entsprechenden lagegeregelten Achse 3 berücksichtigt.

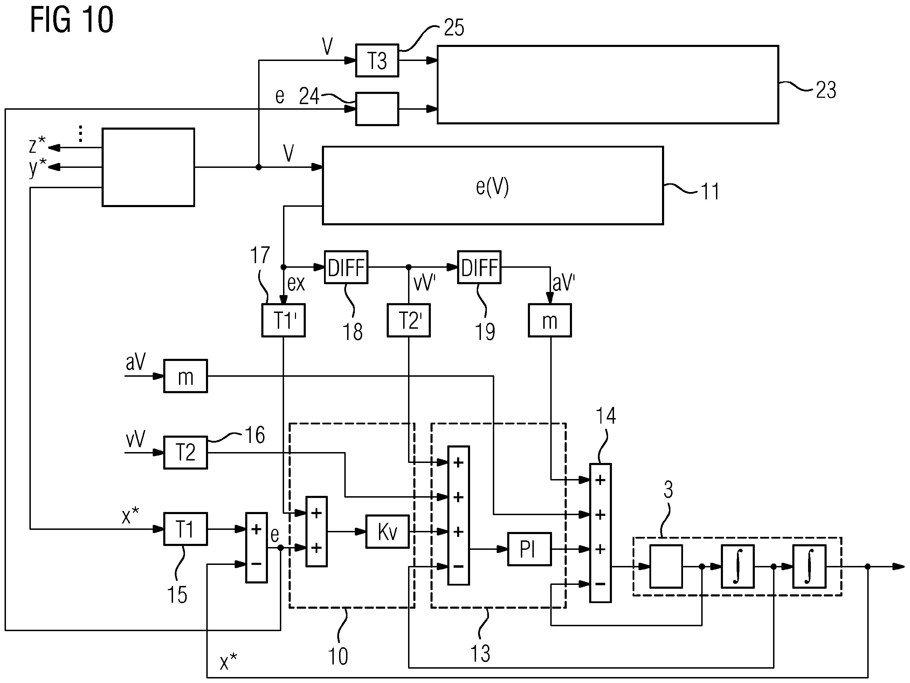

Die Korrekturwerte ex müssen vor dem Hinterlegen in der Speichereinrichtung 11 ermittelt werden. Hierzu kann so vorgegangen werden, wie dies nachfolgend in Verbindung mit FIG 10 erläutert wird.

FIG 10 geht aus von FIG 2. Die übereinstimmenden Sachverhalte werden daher nicht nochmals erläutert. Zusätzlich ist jedoch eine weitere Speichereinrichtung 23 vorhanden. Analog zur Speichereinrichtung 11 kann auch die weitere Speichereinrichtung 23 alternativ in der Nähe der Steuereinrichtung 5 oder von dieser entfernt angeordnet sein, insbesondere in einer Cloud. An einem Knotenpunkt wird die Differenz e von Lagesollwert x* und Lageistwert x - nachfolgend als Lageregelfehler e bezeichnet - abgegriffen. Der Lageregelfehler e wird der weiteren Speichereinrichtung 23 zugeführt. Vorzugsweise erfolgt vor dem Zuführen zur weiteren Speichereinrichtung 23 eine Filterung in einem Frequenzfilter 24. Die Filterung im Frequenzfilter 24 kann beispielsweise eine nichtrekursive digitale Filterung sein, insbesondere eine Tiefpassfilterung. Vorzugsweise weist der Frequenzfilter 24 eine konstante Gruppenlaufzeit auf. Dies hat insbesondere den Vorteil, dass durch die Filterung keine Signalverzerrungen entstehen. Eine Filterordnung des Frequenzfilters 24 kann nach Bedarf bestimmt sein. Gegebenenfalls kann der Frequenzfilter 24 parametrierbar sein. Weiterhin werden der weiteren Speichereinrichtung 23 auch die jeweils zugehörigen Sollwertvektoren V zugeführt. Soweit erforderlich, werden die Sollwertvektoren V zuvor in einem Verzögerungsglied 25 um eine Verzögerungszeit T3 verzögert. Die Steuereinrichtung 5 ermittelt also durch Vergleich eines jeweiligen Lageistwerts x mit dem jeweiligen Lagesollwert x* der entsprechenden lagegeregelten Achse 3 den Lageregelfehler e.

Die Lageregelfehler e werden zunächst nur in der weiteren Speichereinrichtung 23 gespeichert. Sie wirken sich noch nicht aktiv auf die Ansteuerung der lagegeregelten Achsen 3 aus. Es ist aber möglich, in einem nachfolgenden Schritt die in der Speichereinrichtung 11 hinterlegten Korrekturwerte ex anhand der in der weiteren Speichereinrichtung 23 gespeicherten Lageregelfehler zu modifizieren. Beispielsweise kann ein allmähliches Nachführen der Korrekturwerte ex um einen bestimmten Prozentsatz der Differenz zwischen den Korrekturwerten ex und den korrespondierenden Lageregelfehlern e erfolgen. Wenn beide Speichereinrichtungen 11, 23 in der Nähe der Steuereinrichtung 5 angeordnet sind, erfolgt das Nachführen der Korrekturwerte ex vorzugsweise durch die Steuereinrichtung 5. Wenn beide Speichereinrichtungen 11, 23 von der Steuereinrichtung 5 entfernt angeordnet sind, erfolgt das Nachführen der Korrekturwerte ex vorzugsweise durch eine von der Steuereinrichtung 5 verschiedene Recheneinrichtung, beispielsweise einen Cloudrechner. Wenn eine der beiden Speichereinrichtungen 11, 23 in der Nähe der Steuereinrichtung 5 angeordnet ist und die andere der Speichereinrichtungen 11, 23 von der Steuereinrichtung 5 entfernt angeordnet, kann nach Bedarf die eine oder die andere Vorgehensweise ergriffen werden.

Das Nachführen der Korrekturwerte ex kann kontinuierlich oder nur im Einzelfall erfolgen, beispielsweise aufgrund einer Anforderung durch einen Bediener der Werkzeugmaschine 1. Bei einer kontinuierlichen Nachführung ist es sinnvoll, den jeweils auftretenden Lageregelfehler e zu überwachen. Insbesondere muss sichergestellt werden, dass der Lageregelfehler e nicht größer wird. Falls dies geschehen sollte, treten Resonanzen auf, die nicht tolerierbar sind. In diesem Fall sollte entweder das Aufschalten der Korrekturwerte ex beendet werden oder eine Neuabstimmung beispielsweise des Frequenzfilters 24 erfolgen. Insbesondere kann eine Grenzfrequenz des Frequenzfilters 24 reduziert werden.

Es ist möglich, in der weiteren Speichereinrichtung 13 die ungefilterten Lageregelfehler e abzuspeichern. In diesem Fall muss jedoch ebenfalls die entsprechende Filterung erfolgen, bevor die Modifikation bzw. das Nachführen der Korrekturwerte ex erfolgt.

Zusammengefasst betrifft die vorliegende Erfindung somit folgenden Sachverhalt:
Einer Steuereinrichtung 5 einer Werkzeugmaschine 1 wird eine Folge von Sollwertvektoren V vorgegeben. Die Sollwertvektoren V umfassen für eine Mehrzahl von lagegeregelten Achsen 3 der Werkzeugmaschine 1 jeweils einen Lagesollwert x*, y*, z*, usw. Die Steuereinrichtung 5 steuert die lagegeregelten Achsen 3 über einen jeweiligen Lageregler 10 entsprechend den jeweiligen Lagesollwerten x*, y*, z*, usw. an. Dadurch wird ein Werkzeug 4 der Werkzeugmaschine 1 entlang einer Bahn 9 relativ zu einem Werkstück 2 verfahren. In einer der Steuereinrichtung 5 zugeordneten Speichereinrichtung 11 ist zumindest für einen ersten Abschnitt der Bahn 9 für mindestens eine der lagegeregelten Achsen 3 unter direkter oder indirekter Zuordnung zu den mit dem ersten Abschnitt der Bahn 9 korrespondierenden Sollwertvektoren V eine Anzahl von Sätzen 22 von jeweiligen Korrekturwerten ex hinterlegt. Die Steuereinrichtung 5 ruft die Korrekturwerte ex eines der Sätze 22 aus der Speichereinrichtung 11 ab und berücksichtigt sie beim Verfahren des Werkzeugs 4 relativ zu dem Werkstück 2 entlang des ersten Abschnitts der Bahn 9 bei der Ansteuerung der jeweiligen Achse 3 zusätzlich zum jeweiligen Lagesollwert x*.

Die vorliegende Erfindung weist viele Vorteile auf. Insbesondere lassen sich die Qualität und die Produktivität für in Serie gefertigte Teile deutlich verbessern. Die vorliegende Erfindung führt weiterhin zu einer sehr anwenderfreundlichen, weil automatisierbaren Inbetriebnahme. Das Aufschalten der Korrekturwerte ex kann bei Bedarf für alle lagegeregelten Achsen 3 erfolgen. Alternativ kann es auf kritische lagegeregelte Achsen 3 beschränkt werden. Weiterhin ist es möglich, das erfindungsgemäße Bearbeitungsverfahren auf bestimmte Bewegungen einer komplexen Bearbeitung zu beschränken. Beispielsweise ist es nicht erforderlich, das erfindungsgemäße Bearbeitungsverfahren bei Fahrten zum Werkzeugwechsel oder bei anderen Bewegungen, während derer sich das Werkzeug 4 nicht im Eingriff mit dem Werkstück 2 befindet, anzuwenden. In vielen Fällen ist es auch nicht erforderlich, das erfindungsgemäße Bearbeitungsverfahren vor der Endbearbeitung anzuwenden. Beispielsweise kann es ausreichen, das erfindungsgemäße Bearbeitungsverfahren beim Schlichten anzuwenden, aber noch nicht beim vorhergehenden Schruppen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Bearbeitungsverfahren für ein Werkstück (2) durch eine Werkzeugmaschine (1),
- wobei einer Steuereinrichtung (5) der Werkzeugmaschine (1) eine Folge von Sollwertvektoren (V) vorgegeben wird,
- wobei die Sollwertvektoren (V) für eine Mehrzahl von lagegeregelten Achsen (3) der Werkzeugmaschine (1) jeweils einen Lagesollwert (x*, y*, z*, ...) umfassen,
- wobei die Steuereinrichtung (5) die lagegeregelten Achsen (3) über einen jeweiligen Lageregler (10) entsprechend den jeweiligen Lagesollwerten (x*, y*, z*, ...) ansteuert, so dass ein Werkzeug (4) der Werkzeugmaschine (1) entlang einer Bahn (9) relativ zu dem Werkstück (2) verfahren wird,
- wobei in einer der Steuereinrichtung (5) zugeordneten Speichereinrichtung (11) zumindest für einen ersten Abschnitt der Bahn (9) für mindestens eine der lagegeregelten Achsen (3) unter direkter oder indirekter Zuordnung zu den mit dem ersten Abschnitt der Bahn (9) korrespondierenden Sollwertvektoren (V) eine Anzahl von Sätzen (22) von jeweiligen Korrekturwerten (ex) hinterlegt ist und
- wobei die Steuereinrichtung (5) die Korrekturwerte (ex) eines der Sätze (22) aus der Speichereinrichtung (11) abruft und beim Verfahren des Werkzeugs (4) relativ zu dem Werkstück (2) entlang des ersten Abschnitts der Bahn (9) bei der Ansteuerung der jeweiligen Achse (3) zusätzlich zum jeweiligen Lagesollwert (x*) berücksichtigt.

2. Bearbeitungsverfahren nach Anspruch 1,
**dadurch gekennzeichnet,**
**dass** die Sollwertvektoren (V) jeweils ausschließlich die Position (x, y, z) des Werkzeugs (4) relativ zum Werkstück (2) bestimmen.

3. Bearbeitungsverfahren nach Anspruch 1,
**dadurch gekennzeichnet,**
**dass** die Sollwertvektoren (V) die Position (x, y, z) und die Orientierung (α, β) des Werkzeugs (4) relativ zum Werkstück (2) bestimmen.

4. Bearbeitungsverfahren nach Anspruch 1, 2 oder 3,
**dadurch gekennzeichnet,**
**dass** die Sätze (22) von Korrekturwerten (ex) für den ersten Abschnitt der Bahn (9) in der Speichereinrichtung (11) auch für mindestens einen zweiten Abschnitt der Bahn (9) unter Zuordnung zu den mit dem zweiten Abschnitt der Bahn (9) korrespondierenden Sollwertvektoren (V) hinterlegt sind und dass die Steuereinrichtung (5) die Korrekturwerte (ex) eines der Sätze (22) beim Verfahren des Werkzeugs (4) relativ zu dem Werkstück (2) entlang des zweiten Abschnitts der Bahn (9) aus der Speichereinrichtung (11) abruft und bei der Ansteuerung der jeweiligen Achse (3) zusätzlich zum jeweiligen Lagesollwert (x*) berücksichtigt.

5. Bearbeitungsverfahren nach einem der obigen Ansprüche,
**dadurch gekennzeichnet,**
**dass** zu Beginn der Bearbeitung des Werkstücks (2) durch die Werkzeugmaschine (1) eine Aufspannung (A) des Werkstücks (2) in einer Werkstückhalterung (21) der Werkzeugmaschine (1) erfasst wird und dass die Steuereinrichtung (5) die Korrekturwerte (ex) vor ihrer Berücksichtigung anhand der erfassten Aufspannung (A) modifiziert.

6. Bearbeitungsverfahren nach einem der obigen Ansprüche,
**dadurch gekennzeichnet,**
**dass** die Steuereinrichtung (5) beim Berücksichtigen der Korrekturwerte (ex) zusätzlich einen Zeitversatz zwischen dem jeweiligen Korrekturwert (ex) und dem jeweiligen Sollwertvektor (V) berücksichtigt.

7. Bearbeitungsverfahren nach einem der obigen Ansprüche,
**dadurch gekennzeichnet,**
**dass** die Steuereinrichtung (5) mindestens einen weiteren Regler (13, 14) implementiert, der dem jeweiligen Lageregler (10) unterlagert ist und dass die Steuereinrichtung (5) aus den Korrekturwerten (ex) ein Vorsteuersignal (vV', aV') ableitet und dem unterlagerten Regler (13, 14) zuführt.

8. Bearbeitungsverfahren nach einem der obigen Ansprüche,
**dadurch gekennzeichnet,**
**dass** die Anzahl von Sätzen (22) größer als 1 ist und dass die Steuereinrichtung (5) in Abhängigkeit von weiteren, von dem Abschnitt der Bahn (9) verschiedenen Parametern (P) auswählt, welchen der Sätze (22) von Korrekturwerten (ex) sie aus der Speichereinrichtung (11) abruft und bei der Ansteuerung der jeweiligen Achse (3) zusätzlich zum jeweiligen Lagesollwert (x*) berücksichtigt.

9. Bearbeitungsverfahren nach einem der obigen Ansprüche,
**dadurch gekennzeichnet,**
**dass** die Steuereinrichtung (5) die Korrekturwerte (ex) des jeweiligen Satzes (22) vor ihrer Berücksichtigung anhand einer Verfahrgeschwindigkeit (v) beim Abfahren der Bahn (9) modifiziert.

10. Bearbeitungsverfahren nach einem der obigen Ansprüche,
**dadurch gekennzeichnet,**
**dass** die Steuereinrichtung (5) durch Vergleich eines jeweiligen Lageistwerts (x) mit dem jeweiligen Lagesollwert (x*) der lagegeregelten Achse (3) einen Lageregelfehler (e) ermittelt und dass die Steuereinrichtung (5) die Korrekturwerte (ex) des jeweiligen Satzes (22) von Korrekturwerten (ex) anhand des Lageregelfehlers (e) modifiziert.

11. Steuerprogramm für eine Steuereinrichtung (5) einer Werkzeugmaschine (1), wobei das Steuerprogramm Maschinencode (7) umfasst, der von der Steuereinrichtung (5) abarbeitbar ist, wobei die Abarbeitung des Maschinencodes (7) durch die Steuereinrichtung (5) bewirkt, dass die Steuereinrichtung (5) die Werkzeugmaschine (1) gemäß einem Bearbeitungsverfahren nach einem der obigen Ansprüche betreibt.

12. Steuereinrichtung für eine Werkzeugmaschine (1), die mit einem Steuerprogramm (6) nach Anspruch 11 programmiert ist, so dass sie im Betrieb die Werkzeugmaschine (1) gemäß einem Bearbeitungsverfahren nach einem der Ansprüche 1 bis 11 betreibt.

13. Werkzeugmaschine zum Bearbeiten eines Werkstücks (2) durch ein Werkzeug (4),
- wobei die Werkzeugmaschine eine Mehrzahl von lagegeregelten Achsen (3) aufweist, mittels derer das Werkzeug (4) entlang einer Bahn (9) relativ zu dem Werkstück (2) verfahrbar ist,
- wobei die Werkzeugmaschine eine Steuereinrichtung (5) nach Anspruch 12 aufweist, über welche die Achsen (3) der Werkzeugmaschine lagegeregelt werden.
